(19) Europäisches Patentamt European Patent Office Office européen des brevets

(11) **EP 2 123 607 A1**

(12) **DEMANDE DE BREVET EUROPEEN**

(43) Date de publication:
**25.11.2009 Bulletin 2009/48**

(51) Int Cl.:
*C02F 1/36* (2006.01)

(21) Numéro de dépôt: **09163774.4**

(22) Date de dépôt: **13.05.2005**

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.05.2004  FR 0405248**

(62) Numéro(s) de document de la (des) demande(s) initiale(s) en application de l'article 76 CBE:
**05771232.5 / 1 756 010**

(71) Demandeur: **Golden Team**
**06410 Biot (FR)**

(72) Inventeurs:
• **Bourgard, Fabrice**
**06600 Antibes (FR)**

• **Bruneau, Philippe Lionel**
**Dubaï Marina (AE)**

(74) Mandataire: **Maureau, Philippe et al**
**Cabinet GERMAIN & MAUREAU**
**12 Rue Boileau**
**B.P. 6153**
**69466 Lyon Cedex 06 (FR)**

Remarques:
Cette demande a été déposée le 25-06-2009 comme demande divisionnaire de la demande mentionnée sous le code INID 62.

(54) **Procédé de traitement d'eau pure**

(57)    L'invention concerne un procédé de traitement d'eau pure.

Il consiste, après avoir obtenue une eau ultra pure, à la traiter par cavitation dans une cuve équipée d'une antenne acoustique (3) comportant des transducteurs piézoélectriques de type Tonpilz qui émettent au moins à la fréquence d'excitation des molécules d'eau avec une puissance acoustique permettant de dépasser le seuil de cavitation compte tenu de la quantité d'eau à traiter.

Fig 3

EP 2 123 607 A1

**Description**

L'eau est le composé chimique le plus important de la planète : 70% de la surface terrestre correspond aux mers et aux océans. Le corps humain contient 65% de son poids en eau et l'atmosphère terrestre 0,001%. Dans le corps humain le sang contient 85% d'eau, le suc intestinal 99,3%, les sucs gastriques 99,4% et la salive 99,5%, d'où l'importance de l'eau dans les processus biologiques. Composé essentiel de la vie sur la terre, l'eau est le solvant par excellence en chimie industrielle et biologique. Nous notons que si, en industrie la pureté de l'eau est indispensable, elle l'est encore plus en biologie. Malgré toutes les recherches, la molécule d'eau demeure étrange et mal connue. Il existe en réalité plusieurs sortes de molécules d'eau ce qui fait de l'eau un mélange de composés chimiques. La molécule prépondérante est $H_2O$ mais à cause de l'isotopie de l'hydrogène et de l'oxygène il y correspond 18 sortes de molécules d'eau. Plus particulièrement on trouve en petites quantités l'eau lourde, $D_2O$, ralentisseur de neutrons alors que $H_2O$ est capteur de neutrons. $T_2O$, eau tritiée, radioactive, se retrouve dans l'eau de pluie en très petites quantités. Avec $D_2O$ la vitesse des réactions biologiques est moindre et les constantes physiques sont légèrement différentes (la masse volumique de $D_2O$ est supérieure à 1).

Dans la classification périodique des éléments l'oxygène est l'élément numéro 8 et se trouve sur la deuxième ligne VI^ième colonne. A chaque élément de la famille de la VI^ième colonne correspond un composé hydrogéné :

| O (oxygène) | $H_2O$ |
|---|---|
| S (soufre) | $H_2S$ |
| Se (Sélénium) | $H_2Se$ |
| Te (tellure) | $H_2Te$ |

En général, les propriétés physiques et chimiques des éléments d'une même colonne sont voisines ou évoluent régulièrement. Pour l'eau certaines constantes sont inattendues : on trouve des valeurs élevées pour la température de fusion, la température d'ébullition, la chaleur latente de vaporisation (Lv), la chaleur de fusion (Lf) et la chaleur massique (c), ainsi qu'un maximum de densité à 4°C et une grande constante diélectrique ($\varepsilon_r$). L'origine de ces anomalies provient de l'existence de liaisons particulières entre les molécules d'eau, à l'état solide, liquide et même gazeux (on dénombre 38 anomalies).

Plus particulièrement point de fusion et point d'ébullition sont anormaux pour l'eau par rapport à la famille des composés hydrogénés des éléments de la famille de la VI^ième colonne.

|  | $H_2S$ | $H_2Se$ | $H_2Te$ | **$H_2O$** |  |
|---|---|---|---|---|---|
| Tf (°C) | -51° | -60° | -85,6° | **0°** | **Au lieu de -100°** |
| Te (°C) | -2° | -41,5° | -60,7° | **+100°** | **Au lieu de -80°** |

De même pour les autres liquides la densité diminue de façon linéaire quand la température augmente, ce n'est vrai pour l'eau qu'à haute température. On observe un maximum de densité à 4°C sous une atmosphère, là encore à cause de sa structure particulière.

D'après le Docteur Lorenzen, Spécialiste en biologie, l'eau contenue dans les boissons sucrées, la bière, etc ...est peu ou pas utilisée par la cellule et repart directement par les reins.

En fonction du milieu intra ou extra cellulaire l'eau adopte des configurations différentes.

Chaque sorte de cellule utilise quatre sortes de configurations principales de l'eau pour son fonctionnement.

Les molécules d'eau associées en grappes ou micro-clusters, permettent l'information entre les cellules : les protéines du système d'information sont entourées de neuf anneaux constitués de micro clusters. Donc, l'information ne peut bien circuler que si l'eau à une structure bien particulière : cette structure est modifiée par la température et les solutés qu'elle contient.

Il semblerait que le trimère $(H_2O)_3$ eût une participation prépondérante dans le métabolisme de la cellule.

L'eau permet à la fois l'assimilation au cours du métabolisme de la cellule et le transport des déchets, d'où la nécessité d'une eau pure très peu minéralisée pour ne pas surcharger le milieu électrolytique de la cellule et modifier la pression osmotique dans celle-ci.

Dans le sérum sanguin on trouve 80g de protéines par litre et la viscosité est multipliée par deux alors que la présence de NaCl à 9/1000 dans le sérum physiologique ne modifie pas cette viscosité. De même, l'augmentation du nombre d'hématies dans le sang augmente la viscosité de celui-ci.

Il semble donc nécessaire que l'eau d'alimentation fût la moins minéralisée possible de façon à ce qu'elle puisse jouer complètement son rôle de liquide lié dans les échanges avec la cellule.

L'intérêt d'une eau peu minéralisée est que celle-ci est beaucoup mieux assimilable par la cellule et évite la surcharge de travail des reins pour l'élimination des minéraux. En effet, les végétaux pré assimilent les oligo-éléments que l'organisme n'est pas capable d'assimiler directement (l'homme et les animaux sont hétérotrophes[*] et les végétaux sont autotrophes[*]).

Le Professeur Schroder, autorité mondiale sur le sujet de l'eau, conteste la recommandation des eaux minéralisées pour l'alimentation.

D'autre part, alors que l'eau parfaitement pure à un pH de 7 à 25°C et que celle-ci est très sensible aux agressions acides ou basiques extérieures, les eaux minérales qui contiennent des ions hydrogénocarbonates sont moins sensibles, par effet tampon.

La présence des ions calcium ($Ca^{2+}$) et magnésium ($Mg^{2+}$), confère à l'eau une certaine dureté caractérisée par son titre hydrotimétrique (TH). La législation impose pour les eaux de boissons un titre tel que : 15 < TH > 25 alors qu'une eau parfaitement assimilable doit avoir un titre TH.

De même source, utiliser des adoucisseurs n'est pas conseillé : en effet remplacer les ions calcium et magnésium par l'ion sodium n'est pas un bénéfice pour la santé.

Les eaux qui contiennent de la silice et qui sont par ailleurs déminéralisées peuvent avoir un pH légèrement acide.

L'eau et les échanges extra et intra cellulaires :

Pour que la vie cellulaire se maintienne, des substances nombreuses et variées doivent continuellement traverser la membrane plasmique. Les sucres, les acides aminés et les autres éléments nutritifs doivent pénétrer dans la cellule afin de satisfaire ses besoins en énergie et soutenir sa croissance; les déchets et autres produits de dégradation doivent en sortir, sous peine d'être toxiques pour la cellule. Des ions doivent être transportés dans les deux sens, afin de maintenir la composition ionique du milieu intracellulaire, qui est très différente du milieu environnant: il est beaucoup plus riche en ions potassium et moins riche en ions sodium. Ces inégalités entraînent des fuites (dues aux principes d'osmose) qui doivent être compensées par un transport, en direction inverse, contre le gradient de concentration. Tout cela entraîne un trafic bidirectionnel intense au travers de la membrane plasmique (double couche phospholipidique continue) mettant en jeu des phénomènes de diffusion (simple ou facilitée) et transport actif. Seule l'eau est capable de permettre ces transports.

Ces notions montrent que la membrane plasmique est une structure importante pour le maintien des concentrations ioniques et moléculaires de la cellule et pour son isolement biochimique vis-à-vis de l'extérieur ou des autres cellules.

Ces échanges au travers de la membrane cellulaire montrent l'importance de l'eau.

Le problème technique à la base de l'invention est la réalisation d'une eau avec une forme polymérique la plus petite existante (dimère, trimère et pentamère) et le plus faiblement minéralisée. Ces critères permettent de faciliter les échanges au niveau de la cellule et plus particulièrement faciliter le passage de la membrane plasmique par des polymères d'eau.

La solution apportée par la présente invention est de dépolymériser l'eau sous forme de dimères, trimères, pentamères et ce dans la plus grande proportion par rapport au volume d'eau traitée.

On connaît des procédés de potabilisation ou d'assainissement de l'eau utilisant la cavitation ultrasonore pour produire une agitation et un brassage conduisant, en présence de réactifs chimiques oxydants, à la stérilisation de l'eau par action bactéricide.

On connaît également la production de liquides "micro-clustérisés", et notamment d'eau oxygénée "micro-clustérisée", au moyen d'un procédé utilisant la cavitation.

Un tel procédé est notamment décrit dans le brevet US 6 521 248 publié le 18 février 2003. Ce brevet décrit un procédé dans lequel la cavitation est obtenue par pressurisation, par écoulement tourbillonnaire, créant des bulles, puis par dépressurisation rapide, faisant imploser ou exploser les bulles dont les ondes de chocs, ainsi générées, permettent de casser les chaînes polymériques.

Ce processus est répété jusqu'à ce que l'eau atteigne une température de l'ordre de 60° Celsius.

La pressurisation est obtenue au moyen de pompes, et de cycles de pression doivent être répétés pour réchauffer l'eau : ces deux aspects rendent manifestement le procédé peu apte à obtenir des débits importants.

Pour pallier cet inconvénient, l'invention propose un procédé de micro-clustérisation de l'eau, l'eau étant préalablement traitée de façon à être ultra pure, principalement **caractérisé en ce que** l'eau ultra pure est de préférence d'abord chauffée pour être tiédie et que l'eau tiédie est micro-clustérisée par cavitation ultrasonore obtenue au moyen d'une antenne acoustique comportant au moins un transducteur émettant à la fréquence égale ou supérieure à la fréquence d'excitation des molécules d'eau avec une puissance acoustique suffisante pour dépasser le seuil de cavitation compte tenu de la quantité d'eau traitée.

D'autres particularités et avantages de l'invention apparaîtront clairement dans la description qui suit, faite à titre d'exemple non limitatif en regard des figures annexées qui représentent :

- la figure 1, un procédé complet de purification de l'eau ;
- la figure 2, le schéma en coupe longitudinale d'un transducteur utilisé ;
- la figure 3, le schéma en vue de côté de la cuve de traitement selon l'invention ;
- la figure 4, le schéma de côté tourné à 90° de la cuve de traitement selon l'invention.

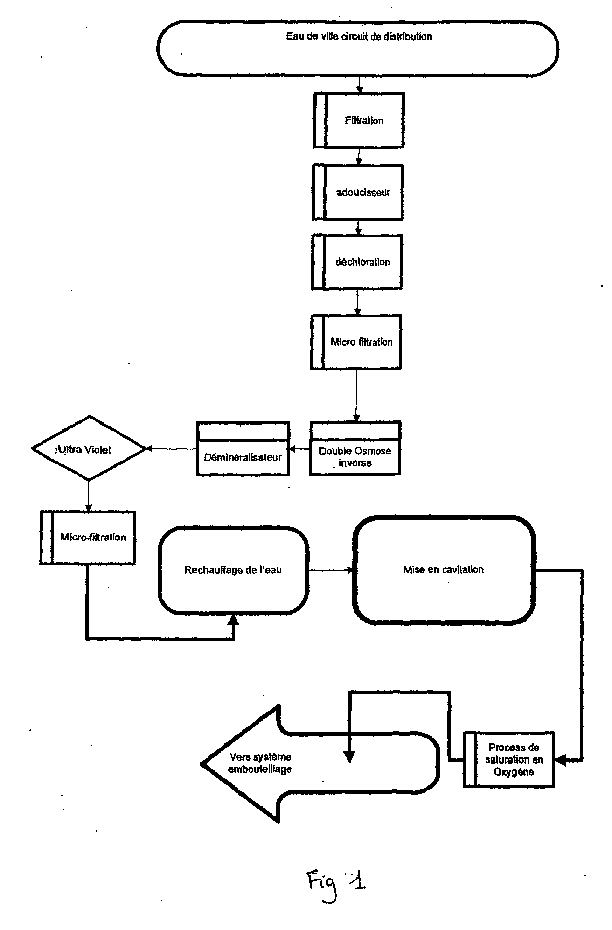

Avant l'étape de micro-clustérisation proprement dite, objet de l'invention, le procédé, selon une réalisation préférée, comporte plusieurs étapes de traitement représentées sous forme d'un bloc diagramme sur la figure 1.

De manière connue, on procède aux étapes suivantes :

- filtration par filtre inférieur à 10 microns,
- adoucissement par élimination des ions calcium, magnésium et carbonates,
- déchloration,
- microfiltration par filtre inférieur à 1 micron,
- osmose inverse par membrane semi-perméable séparant les solides dissous, la matière organique, les virus et les bactéries de l'eau,
- déminéralisation,
- désinfection et élimination des contaminants de l'eau par ultraviolet,
- microfiltration définitive.

L'eau ainsi obtenue est envoyée dans une cuve 1 afin d'y subir les deux traitements :

- réchauffage pour la rendre tiède, sans sortir du cadre de l'invention, le réchauffage peut être effectué en amont,
- micro-clustérisation par cavitation ultrasonore, selon le procédé de l'invention.

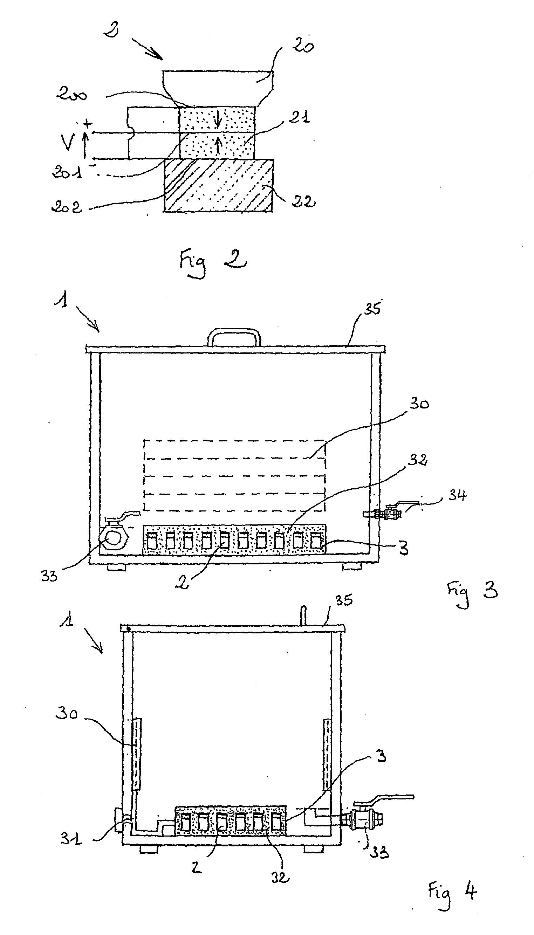

En se rapportant aux figures 3 et 4, le réchauffage de l'eau à une température comprise entre 40 et 60°C et de préférence 55°C est obtenu de manière connue au moyen de résistances électriques 30 placées sur les parois de la cuve. Bien entendu, selon l'invention, plusieurs transducteurs piézoélectriques (2) sont disposés en fond de cuve de manière à insonifier tout le volume d'eau qu'elle contient avec un champ de pression uniforme et à une fréquence correspondante au moins à la fréquence d'excitation des molécules d'eau permettant d'obtenir le pourcentage voulu de clusters (dimères, trimères, pentamères).

Pour cela, selon une réalisation préférée, on utilise des transducteurs de type Tonpilz tels que ceux utilisés en acoustique sous-marine et représenté figure 2.

Brièvement, ils sont constitués d'un pavillon 20, d'un moteur 21 formé d'un empilement de céramiques piézoélectriques polarisées et d'une contre masse 22.

Les céramiques sont munies d'électrodes 200, 201, 202 de manière à leur appliquer une tension V alternative générant ainsi une onde de pression acoustique alternative. Le transducteur se comporte comme un système masse ressort de masse M et d'élasticité K, et la résonance est obtenue pour une fréquence égale à $\dfrac{1}{2\pi}\sqrt{\dfrac{K}{M}}$ correspondant au maximum de la puissance émise. La fréquence de la tension alternative appliquée au transducteur est donc choisie avantageusement égale ou proche de la fréquence résonance.

La taille (diamètre au côté) du pavillon doit être de l'ordre de $\lambda/2$ où $\lambda$ est la longueur d'onde dans l'eau correspondant à la fréquence émise, ceci pour que le transducteur ait une directivité élémentaire à peu près hémisphérique.

L'ensemble des transducteurs mis côte à côte forme ainsi une antenne plane 3.

Pour obtenir un champs de pression uniforme, les transducteurs sont excités en parallèle et placés régulièrement à une distance comprise entre $\lambda$ et $1,5\ \lambda$ en occupant la majeure partie de fond de cuve.

Le nombre de transducteurs dépend de la puissance acoustique délivrée par chaque transducteur et de la quantité d'eau traitée sachant qu'en moyenne il faut environ 10 watts acoustique par litre d'eau pour dépasser le seuil de cavitation.

Exemple de réalisation

L'expérience a montré que pour obtenir le pourcentage voulu de micro-clusters, la fréquence émise devrait être comprise entre 15 kHz et 35 kHz environ.

On a réalisé une cuve pouvant traiter 100 litres d'eau à une fréquence de 25 kHz avec une antenne d'émission formée de 60 transducteurs alimentés chacun avec une puissance électrique de 30 watts environ.

L'antenne 3 est constituée par un parallélépipède rectangle de dimensions

600mmx360mmx100mm formant une boîte dans laquelle sont positionnés les transducteurs, l'alimentation électrique 31 étant faite par un côté. Les transducteurs sont noyés dans du polyuréthane 32 amortissant les vibrations parasites émises par les transducteurs hors pavillon.

L'entrée et la sortie de l'eau est faite au moyen de deux vannes 33, 34 situées vers le bas de la cuve. Elle comporte un couvercle pivotant 35 pour pouvoir y accéder.

L'eau micro-clustérisée est ensuite saturée en oxygène pur en sortie de cuve pour éviter sa contamination par d'autres gaz (figure 1).

**Revendications**

1. Procédé de traitement d'eau pure, c'est-à-dire d'eau préalablement traitée de façon à supprimer notamment les composés minéraux ainsi que les particules en suspension, suivant une technique connue, **caractérisé en ce qu'**il consiste à soumettre l'eau purifiée à une cavitation ultra-sonore, obtenue au moyen d'une antenne acoustique (3) comportant au moins un transducteur (2) émettant à une fréquence égale ou supérieure à la fréquence d'excitation des molécules, comprise entre 15 et 35 KHz et de préférence égale à 25 KHz, avec une puissance acoustique suffisante pour dépasser le seuil de cavitation, de l'ordre de 10 watts acoustique par litre d'eau, compte tenu de la quantité d'eau traitée, et **en ce que**, préalablement au traitement de cavitation ultra-sonore, le procédé consiste à chauffer l'eau à une température comprise entre 40 et 60°C, et de préférence 55°C.

2. Procédé selon la revendication 1, **caractérisé en ce que** les transducteurs (2) sont des transducteurs piézoélectriques de type Tonpilz.

3. Procédé selon l'une des revendications 1 ou 2, **caractérisé en ce que** l'antenne acoustique (3) est plane et que les transducteurs (2) sont positionnés régulièrement, la distance entre les transducteurs étant comprise entre $\lambda$ et 1,5 $\lambda$, $\lambda$ étant la longueur d'onde correspondant à la fréquence émise.

4. Procédé selon l'une des revendications 2 ou 3, **caractérisé en ce que** chaque transducteur comporte un pavillon, la taille, c'est-à-dire le diamètre de côté, du pavillon étant de l'ordre de $\lambda/2$.

5. Procédé selon l'une des revendications 2 ou 4, **caractérisé en ce que** les transducteurs (2) sont noyés dans un polyuréthane.

6. Procédé selon l'une des revendications 1 à 5, **caractérisé en ce que** le traitement de l'eau est réalisé à l'intérieur d'une cuve, et que l'antenne (3) est placée au fond de la cuve.

7. Procédé selon l'une des revendications 1 à 6, **caractérisé en ce que** les transducteurs sont alimentés électriquement en parallèle.

Fig 1

Fig 2

Fig 3

Fig 4

Europäisches
Patentamt

European
Patent Office

Office européen
des brevets

# RAPPORT DE RECHERCHE EUROPEENNE

Numéro de la demande

EP 09 16 3774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/173307 A1 (CARLSON ROBERT F ET AL) 18 septembre 2003 (2003-09-18) * alinéas [0008], [0046] - [0053]; revendications 1-11; figure 2 * ----- | 1-7 | INV. C02F1/36 |
| A | WO 83/02606 A (INTREPRINDEREA DE MEDICAMENTE BUCURESTI) 4 août 1983 (1983-08-04) * revendications 1,2; figure 2 * ----- | 1-7 | |
| A | FR 2 121 983 A (SICALY) 25 août 1972 (1972-08-25) * page 1, ligne 6 - page 2, ligne 14 * ----- | 1-7 | |
| A | US 2003/164308 A1 (SCHLAGER KENNETH J ET AL) 4 septembre 2003 (2003-09-04) * revendications 1-13 * ----- | 1-7 | |
| A | WO 02/060821 A (INDEVEX AB; SAITO, THOMAS, ISAMU) 8 août 2002 (2002-08-08) * page 6 - page 7; revendications 1-7 * ----- | 1-7 | DOMAINES TECHNIQUES RECHERCHES (IPC) |
| D,A | US 6 521 248 B1 (HOLLOWAY MICHAEL A ET AL) 18 février 2003 (2003-02-18) * revendications 1-53; exemples 1,2 * ----- | 1-7 | C02F |

Le présent rapport a été établi pour toutes les revendications

| Lieu de la recherche | Date d'achèvement de la recherche | Examinateur |
|---|---|---|
| Munich | 29 septembre 2009 | Glod, Guy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 123 607 A1**

**ANNEXE AU RAPPORT DE RECHERCHE EUROPEENNE
RELATIF A LA DEMANDE DE BREVET EUROPEEN NO.**

EP 09 16 3774

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2009

| Document brevet cité au rapport de recherche | | | Date de publication | Membre(s) de la famille de brevet(s) | | Date de publication |
|---|---|---|---|---|---|---|
| US 2003173307 | A1 | | 18-09-2003 | US | 2005006314 A1 | 13-01-2005 |
| WO 8302606 | A | | 04-08-1983 | EP | 0099877 A1 | 08-02-1984 |
| | | | | JP | 59500164 T | 02-02-1984 |
| FR 2121983 | A | | 25-08-1972 | AUCUN | | |
| US 2003164308 | A1 | | 04-09-2003 | AUCUN | | |
| WO 02060821 | A | | 08-08-2002 | EP | 1365994 A1 | 03-12-2003 |
| | | | | US | 2004234618 A1 | 25-11-2004 |
| US 6521248 | B1 | | 18-02-2003 | US | 2004121022 A1 | 24-06-2004 |
| | | | | US | 2006146644 A1 | 06-07-2006 |
| | | | | US | 2004126468 A1 | 01-07-2004 |

EPO FORM P0460

Pour tout renseignement concernant cette annexe : voir Journal Officiel de l'Office européen des brevets, No.12/82

**EP 2 123 607 A1**

## RÉFÉRENCES CITÉES DANS LA DESCRIPTION

**Documents brevets cités dans la description**

- US 6521248 B